# EUROPEAN PATENT SPECIFICATION

(11) **EP 1 463 617 B1**
(45) Date of publication and mention of the grant of the patent: **08.07.2009**
(21) Application number: 02801947.9
(22) Date of filing: 21.10.2002
(51) Int. Cl.: B29B 7/84, B29C 47/76, B01D 19/00

(54) **APPARATUS AND METHOD FOR DELIVERING FLUENT COLOURANT MATERIAL**
VORRICHTUNG UND VERFAHREN ZUR ABGABE VON FLIESSFÄHIGEM FÄRBEMATERIAL
SYSTEME ET PROCEDE DE DISTRIBUTION D'UNE MATIERE COLORANTE FLUENTE

(30) Priority: 24.10.2001 GB 0125497
(43) Date of publication of application: 06.10.2004
(73) Proprietor: Colormatrix Europe, Ltd., Macclesfield, Cheshire SK11 6AY (GB)
(72) Inventor: JONES, Brian, Stewart, Newton-le-Willows, Merseyside WA12 0JN (GB); WHITEHEAD, David, John, Lowton, Warrington WA3 2PW (GB)
(74) Representative: Brierley, Anthony Paul
(86) International application number: PCT/GB2002/004732
(87) International publication number: WO 2003/035346

(56) References cited:
- EP-A- 0 938 960
- US-A- 4 382 557
- US-A- 5 409 523
- US-A- 5 833 363
- US-A- 5 860 737

## Description

The present invention relates to apparatus and a method for delivering fluent colourant material and more particularly to apparatus and a method for the delivery of liquid colourants to a premixer stage of plastics forming equipment such as an injection moulder or an extruder wherein the colourant is mixed with the plastics material prior to being formed

It is know to use liquid colourants to colour plastics material. Typically, this is achieved by accurately dosing liquid colourants into a premixer of plastics forming equipment. One example of such a system is described in our European patent application No. 99304839.6 (publication no. 0965423) in which a dosing pump draws liquid colourant from vertically displaced collapsible reservoirs and delivers it to a premixer. The accuracy and consistency of liquid colourant dosing is highly sensitive to the presence of any air in such a system. Therefore care is taken to keep this system as free of air as possible. In spite of these efforts, however, it has been observed that air occasionally enters the system due to leaks in connecting pipes and/or hoses, during coupling and uncoupling of various components of the system or from air contained within the collapsible reservoirs or in the liquid colourant itself.

The current method of removing air from the system is to use air bleed valves. It has been found, however, that this method does not ensure that the system is sufficiently free of air to maintain dosing levels at the required level of accuracy or consistency, particularly since liquid colourants generally have relatively high viscosities.

The object of the present invention is to obviate or mitigate these problems.

According to a first aspect of the present invention there is provided apparatus for delivering fluent colourant material to plastics forming equipment, the apparatus comprising at least one main reservoir containing said fluent colourant material, a dosing pump having an inlet and an outlet and for delivering a predetermined amount of fluent material to said forming equipment, an intermediate reservoir between the main reservoir(s) and the dosing pump inlet for temporarily retaining fluent colourant material, and an evacuation pump in communication with the intermediate reservoir for selectively evacuating gas therefrom.

By retaining the liquid in a reservoir intermediate the main reservoir and the forming equipment and evacuating air from the intermediate reservoir when required, the accuracy and consistency of the colorant dosing is much improved having regard to prior art systems.

Preferably there is provided means for comparing the amount of colourant in the intermediate reservoir with a predetermined amount, and the evacuation pump is activated when the detected amount falls below the predetermined amount. In a preferred embodiment the means for comparing is a proximity sensor for detecting the level of the liquid within the intermediate reservoir, the sensor issuing a signal when the detected level falls below the predetermined level.

Using a sensor to monitor the amount of liquid within the intermediate reservoir relative to a predetermined amount greatly increases the accuracy and consistency of the amount of liquid within the reservoir.

The main reservoirs may be collapsible and are preferably located above the intermediate reservoir.

The sensor may be connected to an outer wall of the intermediate reservoir.

According to a second aspect of the present invention there is provided a method for delivering fluent colorant material to plastics forming equipment, comprising the steps of:
storing the fluent colourant material in at least one main reservoir, using a dosing pump having an inlet and an outlet to deliver a predetermined amount of fluent material to said equipment, providing an intermediate reservoir between the main reservoir(s) and the dosing pump inlet so as to retain temporarily fluent colourant material before it is delivered, and evacuating gas from the intermediate reservoir.

In a preferred embodiment the method includes the additional step of comparing the amount of colourant in the intermediate reservoir with a predetermined amount, and evacuating the gas when the detected amount falls below the predetermined amount.

The comparison is preferably performed by a proximity sensor that detects the level of the liquid within the intermediate reservoir, the sensor issuing a signal when the detected level falls below a predetermined level.

A specific embodiment of the present invention will now be described, by way of example only, with reference to the accompanying drawings in which:
Figure 1 is a schematic representation of the fluent colourant delivery apparatus of the present invention.
Figure 2 is a perspective view of an intermediate reservoir of the present invention; and
Figure 3 is a side view of the reservoir of figure 2;

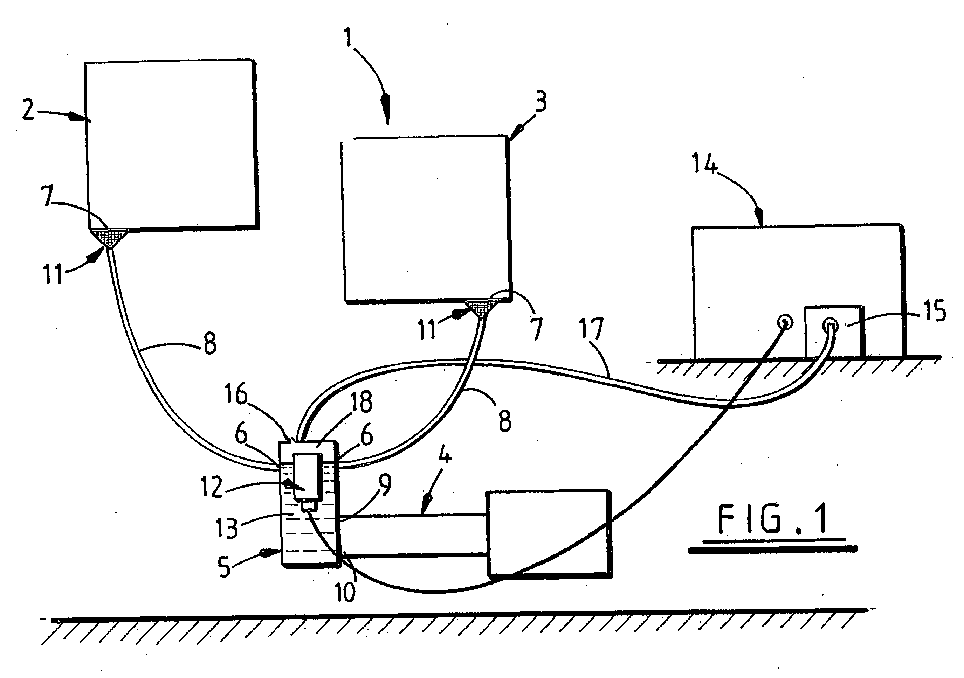

Referring to figure 1, the fluent colourant delivery apparatus 1 has a pair of vertically spaced main colourant reservoirs 2,3 of the kind described in our aforementioned patent application. The content of these reservoirs is delivered to a premixer of plastics forming equipment (not shown) by a dosing pump 4.

An intermediate reservoir 5 is disposed between the main reservoirs 2, 3 and the dosing pump and serves to retain colourant temporarily. At its upper end colourant inlets 6 are connected to outlet 7 of the main reservoirs via flexible hosing 8. At the lower end of the reservoir 5 a colorant outlet 9 is connected to an inlet 10 of the dosing pump 4.

Each of the main reservoirs 2, 3 is located above the intermediate reservoir 5 and its respective outlet 7 is connected to the flexible hosing 8 with quick-connect valve couplings 11.

A capacitance proximity sensor 12 is disposed on a wall of the intermediate reservoir 5 to detect the level of liquid colourant 13 therein. The sensor 12 is connected to an electronic control unit 14 which processes signals received from the sensor 12 and transmits control signals to an evacuation pump 15. The pump 15 is connected to an aperture in a top wall 16 of the intermediate reservoir 5 via a flexible hose 17 and is in communication with the atmosphere 1.8 within the reservoir 5 above the liquid colourant 13. The hose 17 contains a valve (not shown) that is operable to close communication between the reservoir and the evacuation pump if necessary.

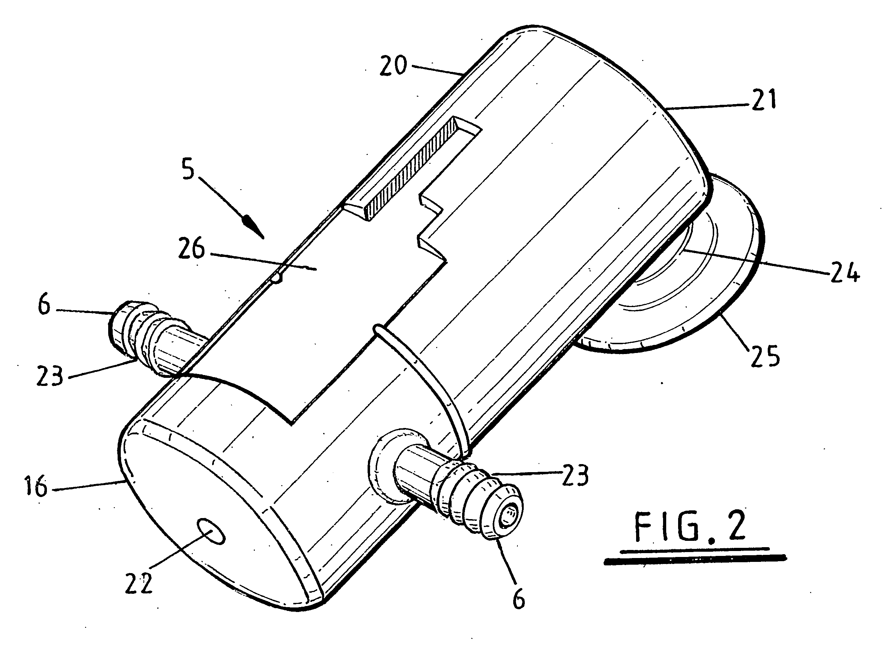

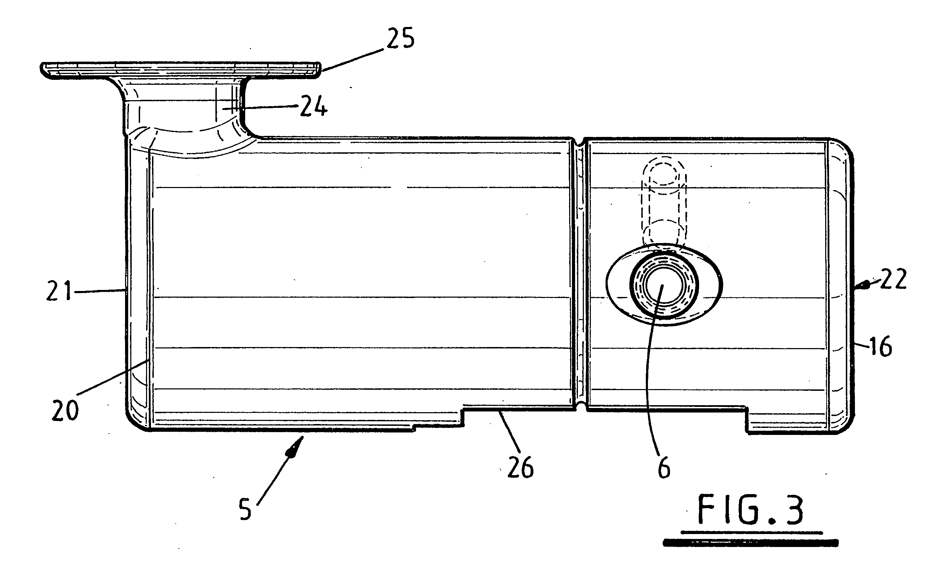

The intermediate reservoir 5 is illustrated in more detail in figures 2 and 3. The reservoir 5 is made of polyethylene and has a broadly cylindrical body 20 with top and bottom walls 16, 21. The top wall 16 has a circular orifice 22 to which the evacuation pump 15 is connected via the hose 17. The inlet conduits 6 extend radially outwardly from an upper section of cylindrical body 20, each conduit 6 having a ribbed outer surface 23 to aid connection of the hoses 8.

The colourant outlet 9 has a short tubular section 24 extending radially outwardly from a lower section of the reservoir 5 and terminating in a flange 25 for connection to the dosing pump 4.

A section of the body of the intermediate reservoir 5 is recessed at 26 to serve as a mounting location for the sensor 12. The recess 26 has a shape complementary to that of the sensor 12 so as to enable secure connection.

In use, the intermediate reservoir 5 and pump 4 are first primed with liquid colourant. Activation of the dosing pump 4 draws liquid colourant from the main reservoirs 2, 3 into the intermediate reservoir 5 and then through the intermediate reservoir outlet 9 into the pump 4. Thereafter a specific amount of liquid colourant 13 is dosed into the premixer by activating the dosing pump 4 for a predetermined period of time. In the case of a progressive cavity pump the rotor is rotated through a calculated angle to deliver a predetermined volume of colourant 12 to the premixer 2. However, it is to be understood that other pumps such as those of the peristaltic kind may be used. As colorant egresses from the intermediate reservoir 5 it is simultaneously replenished from the main reservoirs 2, 3.

In the event that air is drawn into the intermediate reservoir (e.g. from any of the sources mentioned above) it will be at the expense of the colorant 13 whose level in the intermediate reservoir will fall. When this level falls below a predetermined level, the sensor 12 is triggered and transmits a signal to the control unit 14 which then processes this signal and transmits a control signal to the evacuation pump 15 instructing it to switch from its normal quiescent state to its active state. Upon activation, the pump 15 removes air from the space above the colourant through the hose 17. The evacuation of the air in the intermediate reservoir allows more colourant to be drawn from the main reservoirs 2, 3 through the hoses 8.The colourant may fall under gravity through the hoses 8 if it is of sufficiently low viscosity. Alternatively or in addition the evacuation of air from the reservoir may serve to reduce the atmospheric pressure therein thereby drawing the colourant down the hoses 8. When the level of colourant 13 within the intermediate reservoir 5 reaches the predetermined level the sensor 12 is again triggered and transmits a further signal to the control unit 14 which in turn transmits a signal instructing the evacuation pump 15 to return to its quiescent state whereupon the valve in the hose 17 is closed so as to prevent colourant from flowing towards the evacuation pump.

In this way, the level of colourant 13 within the intermediate reservoir 5 is maintained close to the predetermined level so as to ensure that air cannot enter the dosing pump or the plastic forming equipment. The accuracy and consistency of the colourant dosed into the plastic manufacturing assembly 6 is thereby significantly increased.

It will be understood that numerous modifications can be made to the embodiment of the invention described above without departing from the underlying inventive concept and that these modifications are intended to be included within the scope of the invention as defined in the claims. The reservoir may take any convenient shape and may be made of any suitable material. Polyethylene is particularly suitable when using a capacitive proximity sensor as described herein, however a different type of sensor may be used and the reservoir could be manufactured from a different type of plastic or a metallic material. The evacuation pump may be of any suitable type and may be a hand-held device that is activated when an alarm signal is generated by the proximity sensor rather than being controlled automatically by the control unit. The evacuation of the atmosphere within the intermediate reservoir is not limited to air, it can be any gas which has entered the system and requires evacuation therefrom.

## Claims

1. Colourant delivery apparatus (1) for delivering fluent colourant material to a plastics forming device, the apparatus comprising at least one main reservoir (2, 3) for containing said fluent colourant material, a dosing pump (4) having an inlet and an outlet and for delivering a predetermined amount of fluent colourant material to said device, an intermediate reservoir (5) between the main reservoir(s) (2, 3) and the dosing pump inlet for temporarily retaining fluent colourant material, comparison means (12) for comparing the amount of colourant in the intermediate reservoir (5) with a predetermined amount, an evacuation pump (15) in communication with the intermediate reservoir (5) for selectively evacuating gas therefrom and means (14) for activating said pump when said comparison means (12) detects that the amount in the intermediate reservoir (5) has fallen below the predetermined amount.

2. Colourant delivery apparatus according to claim 1, wherein the comparison means (12) comprises a proximity sensor for detecting the level of the liquid within the intermediate reservoir (5), the sensor issuing a signal when the detected level falls below the predetermined level.

3. Colourant delivery apparatus according to claim 1 or 2, wherein said evacuation pump (15) is connected to the top of the intermediate reservoir (5) so as to be in communication with an atmosphere above colourant in that reservoir.

4. Apparatus according to any preceding claim, wherein the main reservoir(s) (2, 3) is (are) collapsible.

5. Apparatus according to any preceding claim wherein the main reservoir(s) (2, 3) is (are) located above the intermediate reservoir.

6. Apparatus according to claim 2, wherein the sensor (12) is connected to an outer wall of the intermediate reservoir.

7. A method for delivering fluent colorant material to a plastics forming device, comprising the steps of storing the fluent colourant material in at least one main reservoir (2, 3), using a dosing pump (4) having an inlet and an outlet to deliver a predetermined amount of fluent colourant material to said device, providing an intermediate reservoir (5) between the main reservoir(s) (2, 3) and the dosing pump inlet so as to retain temporarily fluent colourant material, comparing the amount of colourant in the intermediate reservoir (5) with a predetermined amount and operating an evacuation pump (15) selectively to evacuate gas from the intermediate reservoir (5) when the amount of colourant in the reservoir has fallen below the predetermined amount.

8. A method according to claim 7, wherein the comparison is performed by a proximity sensor (12) that detects the level of the liquid within the reservoir (5), the sensor issuing a signal when the detected level falls below the predetermined level.

## Patentansprüche

1. Färbematerial-Abgabevorrichtung (1) zum Abgeben eines fließfähigen Färbematerials an eine Kunststofffarmvorrichtung, wobei die Vorrichtung enthält: wenigstens einen Hauptvorratsbehälter (2, 3), der das fließfähige Färbematerial aufnimmt, eine Dosierpumpe (4), die einen Einlass und einen Auslass hat und eine vorbestimmte Menge des fließfähigen Färbematerials der Vorrichtung zuführt, einen Zwischenvorratsbehälter (5) zwischen dem/den Hauptvorratsbehälter(n) (2, 3) und dem Dosierpumpeneinlass, um vorübergehend fließfähiges Färbematerial zurückzuhalten, eine Vergleichseinrichtung (12), die die Menge des Färbematerials im Zwischenvorratsbehälter (5) mit einer vorbestimmten Menge vergleicht, eine Absaugpumpe (15) in Verbindung mit dem Zwischenvorratsbehälter (5), um wahlweise Gas aus diesem abzusaugen, und eine Einrichtung (14), die diese Pumpe aktiviert, wenn die Vergleichseinrichtung (12) feststellt, dass die Menge im Zwischenvorratsbehälter (5) unter die vorbestimmte Menge gefallen ist.

2. Färbematerial-Abgabevorrichtung nach Anspruch 1, bei der die Vergleichseinrichtung (12) einen Annäherungssensor enthält, der den Flüssigkeitspegel innerhalb des Zwischenvorratsbehälters (5) erfasst, wobei der Sensor ein Signal ausgibt, wenn der erfasste Pegel unter den vorbestimmten Pegel abfällt.

3. Färbematerial-Abgabevorrichtung nach Anspruch 1 oder 2, bei der die Absaugpumpe (15) mit der Oberseite des Zwischenvorratsbehälters (5) derart verbunden ist, dass sie in Verbindung mit einer Atmosphäre über dem Färbematerial in diesem Vorratsbehälter steht.

4. Vorrichtung nach einem der vorhergehenden Ansprüche, bei der der/die Hauptvorratsbehälter (2, 3) faltbar ist (sind).

5. Vorrichtung nach einem der vorhergehenden Ansprüche, bei der sich der/die Hauptvorratsbehälter über dem Zwischenvorratsbehälter befindet (befinden).

6. Vorrichtung nach Anspruch 2, bei der der Sensor (12) mit einer Außenwand des Zwischenvorratsbehälters verbunden ist.

7. Verfahren zum Abgeben eines fließfähigen Färbematerials an eine Kunststoffformvorrichtung, umfassend folgende Schritte: Aufbewahren des fließfähigen Färbematerials in wenigstens einem Hauptvorratsbehälter (2, 3) unter Verwendung einer Dosierpumpe (4), die einen Einlass und einen Auslass hat, um eine vorbestimmte Menge des fließfähigen Färbematerials der Vorrichtung zuzuführen, Bereitstellen eines Zwischenvorratbehälters (5) zwischen dem/den Hauptvorratsbehälter(n) (2, 3) und dem Dosierpumpeneinlass, um so vorübergehend fließfähiges Färbematerial zurückzuhalten, Vergleichen der Menge des Färbematerials im Zwischenvorratsbehälter (5) mit einer vorbestimmten Menge und Betätigen einer Absaugpumpe (15), um wahlweise Gas aus dem Zwischenvorratsbehälter (5) abzusaugen, wenn die Menge des Färbematerials im Vorratsbehälter unter die vorbestimmte Menge abgefallen ist.

8. Verfahren nach Anspruch 7, bei dem der Vergleich durch einen Annäherungssensor (12) ausgeführt wird, der den Flüssigkeitspegel innerhalb des Vorratsbehälters erfasst, wobei der Sensor ein Signal ausgibt, sofern der erfasste Pegel unter den vorbestimmten Pegel abfällt.

## Revendications

1. Appareil de distribution de colorant (1) pour distribuer un matériau colorant fluide à un dispositif de formage de plastique, l'appareil comprenant au moins un réservoir principal (2, 3) pour contenir ledit matériau colorant fluide, une pompe de dosage (4) comportant une entrée et une sortie et destinée à distribuer une quantité prédéterminée de matériau colorant fluide audit dispositif, un réservoir intermédiaire (5) entre le ou les réservoir(s) principal (principaux) (2, 3) et l'entrée de pompe de dosage pour contenir temporairement du matériau colorant fluide, des moyens de comparaison (12) pour comparer la quantité de colorant dans le réservoir intermédiaire (5) à une quantité prédéterminée, une pompe d'évacuation (15), en communication avec le réservoir intermédiaire (5), pour évacuer sélectivement un gaz à partir de celui-ci et des moyens (14) pour activer ladite pompe lorsque lesdits moyens de comparaison (12) détectent que la quantité dans le réservoir intermédiaire (5) se trouve en dessous de la quantité prédéterminée.

2. Appareil de distribution de colorant selon la revendication 1, dans lequel les moyens de comparaison (12) comprennent un capteur de proximité pour détecter le niveau de liquide à l'intérieur du réservoir intermédiaire (5), le capteur envoyant un signal lorsque le niveau détecté se trouve en dessous du niveau prédéterminé.

3. Appareil de distribution de colorant selon la revendication 1 ou 2, dans lequel ladite pompe d'évacuation (15) est raccordée à la partie supérieure du réservoir intermédiaire (5) afin d'être en communication avec une atmosphère au-dessus du colorant dans le réservoir.

4. Appareil selon une quelconque revendication précédente, dans lequel le ou les réservoir(s) principal (principaux) (2, 3) est (sont) compressible(s).

5. Appareil selon une quelconque revendication précédente, dans lequel le ou les réservoir(s) principal (principaux) (2, 3) est (sont) situé(s) au-dessus du réservoir intermédiaire.

6. Appareil selon la revendication 2, dans lequel le capteur (12) est relié à une paroi extérieure du réservoir intermédiaire.

7. Procédé de distribution de matériau colorant fluide à un dispositif de formage de plastique, comprenant les étapes consistant à stocker le matériau colorant fluide dans au moins un réservoir principal (2, 3), à utiliser une pompe de dosage (4), comportant une entrée et une sortie, pour distribuer une quantité prédéterminée de matériau colorant fluide audit dispositif, à fournir un réservoir intermédiaire (5) entre le ou les réservoir(s) principal (principaux) (2, 3) et l'entrée de pompe de dosage afin de contenir temporairement du matériau colorant fluide, à comparer la quantité de colorant dans le réservoir intermédiaire (5) à une quantité prédéterminée, et à mettre en fonctionnement une pompe d'évacuation (15) sélectivement pour évacuer un gaz à partir du réservoir intermédiaire (5) lorsque la quantité de colorant dans le réservoir se trouve en dessous de la quantité prédéterminée.

8. Procédé selon la revendication 7, dans lequel la comparaison est réalisée par un capteur de proximité (12) qui détecte le niveau du liquide à l'intérieur du réservoir (5), le capteur envoyant un signal lorsque le niveau détecté se trouve en dessous du niveau prédéterminé.
